# EUROPEAN PATENT SPECIFICATION

(11) **EP 0 686 095 B1**
(45) Date of publication and mention of the grant of the patent: **17.11.1999**
(21) Application number: 94909671.3
(22) Date of filing: 17.02.1994
(51) Int. Cl.: B42D 15/10, G06K 5/00, B43M 3/04

(54) **AUTOMATIC EMBOSSED CARD PACKAGE APPARATUS AND METHOD**
VORRICHTUNG UND VERFAHREN ZUR AUTOMATISCHEN VERPACKUNG VON GEPRÄGTEN KARTEN
APPAREIL ET PROCEDE D'EMBALLAGE AUTOMATIQUE DE CARTES GAUFREES

(30) Priority: 19.02.1993 US 19865
(43) Date of publication of application: 13.12.1995
(73) Proprietor: DYNETICS ENGINEERING CORPORATION, Lincolnshire, IL 60069-4209 (US)
(72) Inventor: HILL, Jeffrey, L., Mundelein, IL 60060 (US); HILL, Gregory, S., Lake Zurich, IL 60047 (US); BRETL, Robert, J., Menominee, MI 49858 (US); ZUCK, Gary, Prospect Heights, IL 60076 (US); KASSABIAN, Fred, J., Arlington Heights, IL 60005-1639 (US); JORDAN, Bryant, J., Mt. Prospect, IL 60056 (US)
(74) Representative: Chameroy, Claude
(86) International application number: US9401705
(87) International publication number: WO9419196

(56) References cited:
- DE-A- 4 107 469
- US-A- 4 034 210
- US-A- 4 194 685
- US-A- 4 194 685
- US-A- 4 384 196
- US-A- 4 866 545
- US-A- 5 151 582
- US-A- 5 509 886
- IBM TECHNICAL DISCLOSURE BULLETIN, vol. 14, no. 1, June 1971, pages 283-284, XP002007118 DEMCHYSSHYN: "magnetic credit card processor"

## Description

### Field of the Invention

This invention relates to apparatus for automatically producing embossed card packages composed of embossed cards mounted to matching carrier mailing forms which, in turn, are stuffed into window envelopes for mailing and methods of using same.

### Description of the related art including information disclosed under 37 CFR 1.197 - 1.99

Credit card embossers of the type which create embossed, or raised, characters on plastic or metal cards, such as credit cards, debit cards, charge cards, library cards, identification cards, access cards, and the like are well known. Examples of such apparatus are show in U.S. patents No. 3,861,299 of Drillick entitled "High Speed Automatic Card Embosser" issued January 21, 1975; No. 4,088,216 of LaManna et al. entitled "Automatic Embossing System" issued May 9, 1978; No. 4,180,338 of LaManna et al. entitled "Automatic Embossing System With Document Transfer" issued December 25, 1979; No. 4,271,012 of LaManna et al. entitled "Automatic Embossing System" issued June 2, 1981; No. 4,384,711 of Gabel et al. entitled " Card Feeding Apparatus For an Automatic Embossing System" issued May 24, 1983; No. 4,420,819 of Price et al. entitled "System For Processing and Storing Transaction Data and For Transmitting the Transaction Data to a Remote Host Computer" issued December 13, 1983; No. 4,686,898 of LaManna et al. entitled "Credit Card Embossing System" issued August 18, 1987; No. 4,688,785 of Nubson et al. entitled "Embossing Assembly For Automatic Embossing System" issued August 25, 1987; No. 4,755,069 of LaManna et al. entitled "Credit Card Embossing and Recording System" issued July 5, 1988; No. 4,784,059 of LaManna et al. entitled "Credit Card Embossing System" issued November 15, 1988; No. 4,789,420 of LaManna et al. entitled "Credit Card Embossing System" issued December 6, 1988; No. 4,866,545 of LaManna et al. entitled "Credit Card *Embossing and Recording System" issued September 12, 1989 and 4,900,168 of LaManna et al. entitled "Credit Card Transporting* Embossing and Recording System" issued February 13, 1990.

Likewise, it is known to automatically mount or attach credit cards to, or insert credit cards into, carrier mailing forms by the inserters shown in U.S. patents No. 4,034,210 of Hill et al. entitled "Credit Card Carriers and Methods of Manufacture" issued July 5, 1977; No. B1 4,194,685 of Hill et al. entitled "Verifying Insertion System Apparatus and Method of Operation" issued February 19, 1985 and No. 4,429,217 entitled "Verifying Insertion System and Apparatus" issued January 31, 1984.

Apparatus for automatically "stuffing" such carrier mailing forms into window envelopes and automatically applying postage are also known.

An attempt has been made to combine the functions of embossing and inserting cards into a single card package production apparatus which is illustrated in U.S. patent No. 4,384,196 issued May 17, 1983 to McCumber et al.

While such combination embosser/inserter units have met with some success, they are known to suffer from certain disadvantages. Full verification to make sure the card has been correctly embossed and that the carrier into which it is inserted is the mailing form with the correct name and address of the party to whom the inserted cards are issued is of the utmost importance, but yet such verification was lacking. Although there are different types of standard card carrier mailing forms, the only known embossed card package production apparatus is capable of using only one type of form and thus lacks versatility needed for optimum utilization. Likewise, the carriers are not checked for accuracy. Another problem with the known apparatus is that the rejected cards are allowed to be inserted into carriers before rejection which disadvantageously produces incorrect, rejected card packages that look like correct ones. Also, the known production apparatus provided no means for automatic application to the cards of stick-on labels with security activation information to thereby precluding fully automated production of card packages with labeled cards. Another serious problem with the known production apparatus is that because it lacks any means to read the embossed characters on card identifying information on the carrier to determine if there is a match, it is essential that the cards and matching carriers are synchronized to cause them to come together in precise matching sequence.

### SUMMARY OF THE INVENTION

The object of the invention is achieved by providing a method of mounting cards to a plurality of different mailing forms, according to claims 1 to 3.

Also, the object of the invention is obtained by providing a mailing form for carrying a card, comprising a flexible planar body for supporting at least one card, a pair of spaced corner pockets carried by the body for receipt of a pair of opposed corners of the card to hold the card against movement in three of four possible rectilinear directions and a lip carried by the body for engagement with an edge of the card intermediate the other pair of corners to releasably hold the card against movement in the fourth possible rectilinear directions.

Obtainment of the object is also achieved by provision of a mailing form for carrying a card, comprising a flexible planar body for supporting at least one card, a pair of rectilinear slots cut in the body to form a pair of opposed corner pockets for receipt of opposed corners of the card, each rectilinear slot having a pair of spaced slot section parallel to each other and a cross slot section transversely extending between the pair of parallel spaced slot sections and a flap for holding the card against slidable removal of the card from the corner pockets.

### BRIEF DESCRIPTIONS OF THE DRAWINGS

The foregoing objects and advantageous features of the invention will be explained in greater detail and others will be made apparent from the detailed description of the preferred embodiment of the present invention which is given with reference to the several figures of the drawing, in which:
Fig. 1 is a front view of the preferred embodiment of the embossed card pack production system;
Fig. 2 is an illustration of a card having a magnetic stripe and embossed character;
Figs. 3A and 3B are front views of preferred embodiments of different types of card carrier forms preferably used in the preferred embodiment; and
Fig. 4 is a functional block diagram of the preferred embodiment of the embossed card pack production system illustrating the preferred steps for producing an embossed card pack.

### DESCRIPTION OF THE PREFERRED EMBODIMENT

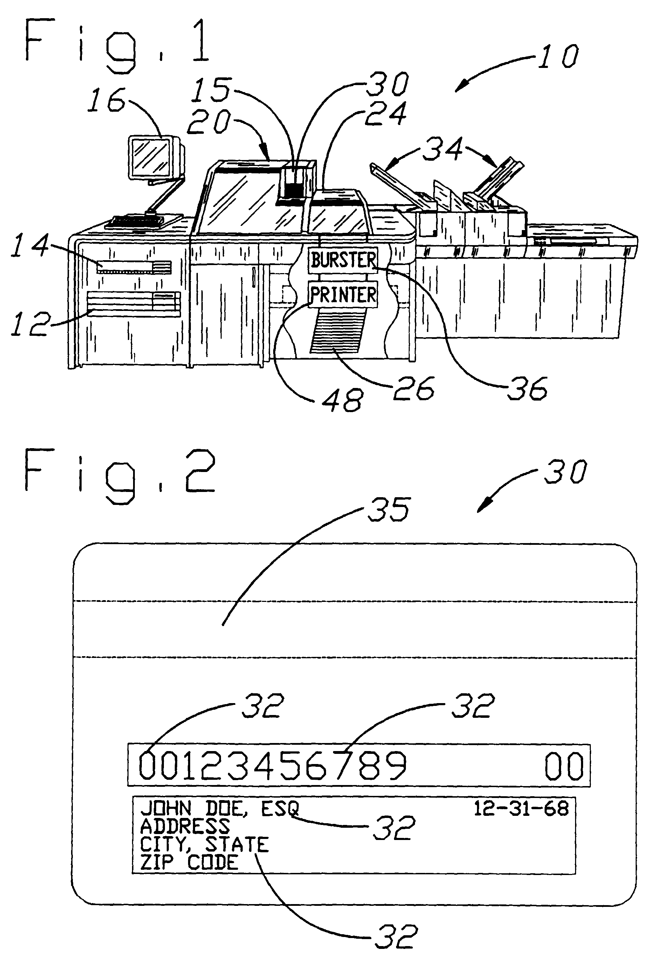

Referring to Fig. 1, the preferred embodiment of the embossed card pack production system, or ECPAP, system, 10 functions to produce fully verified, embossed and encoded credit cards mounted to verifiably matched carrier forms, or carriers, with the account owner's name and mailing address printed thereon and inserted into window envelopes that are metered with appropriate postage and are ready for mailing.

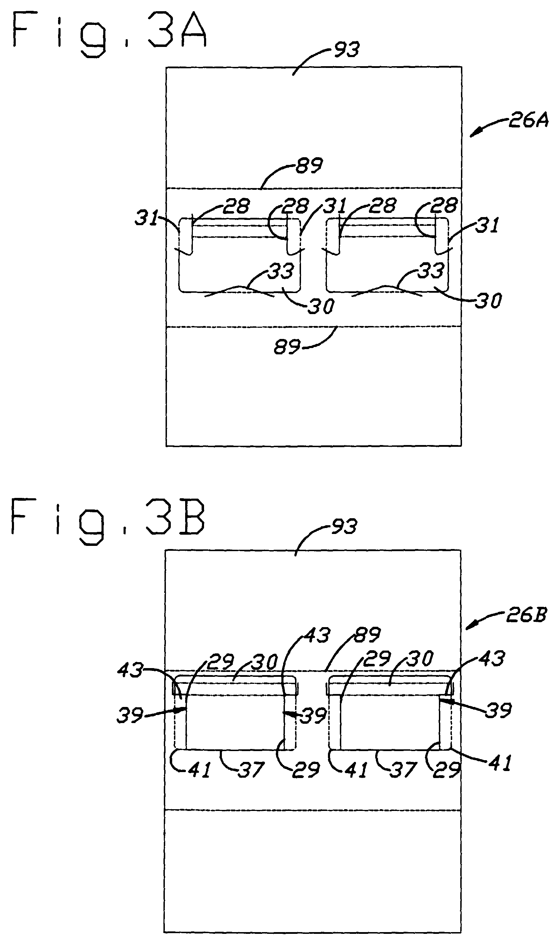

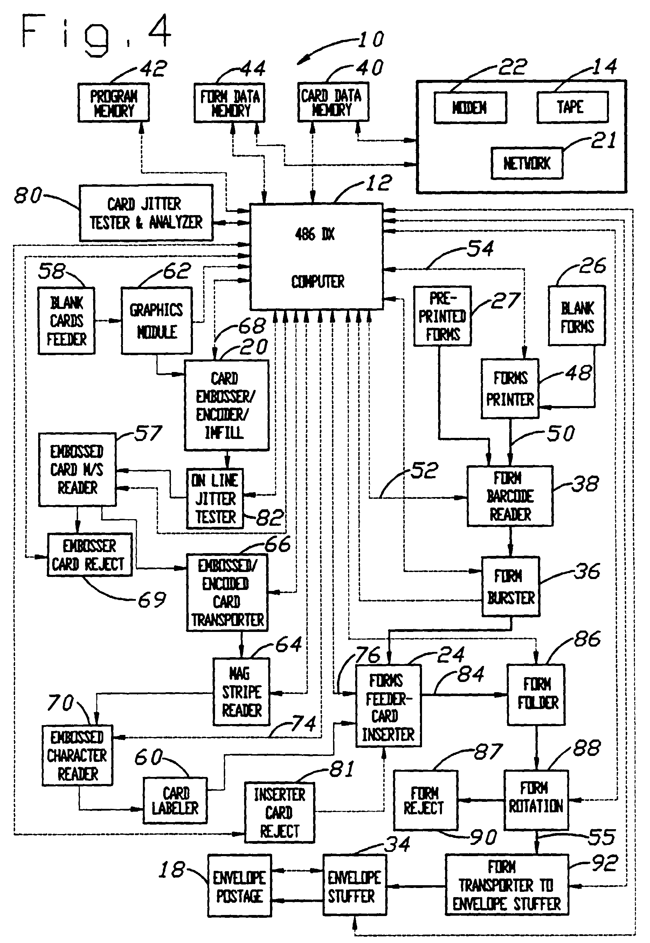

The ECPAP system 10 includes a 486 DX computer 12 and an open reel type drive 14 for controlling the operation of the system. A keyboard 13 is used for manual input of account data and control information into the computer 12. Information inserted into the computer 12 memory is shown at a display screen 16 of the system 10. An embosser 20 embosses various alphanumeric characters on blank cards and the embossed cards 30, Fig. 2, are carried from the embosser 20 to card inserter 24. The inserter 24 inserts embossed cards into verifiably matched printed carrier forms 26A. The carrier 26 holding one or more embossed cards 30, Fig. 2, are folded and stuffed into suitable window envelopes (not shown) at an envelope stuffer 34. The stuffed envelopes containing the matched cards 30 and the carrier forms 26 are transported to a postage metering machine 18 to print the appropriate mailing postage on the stuffed envelopes. The materials from which these embossed card packages are produced include blank carrier forms, or carriers, 26 and blank credit cards or like, such as shown in the U.S. patents noted above. The carrier forms 26 are preferably one of those shown in Figs. 3A and 3B and are fanfolded like those shown in U.S. patent 4,034,210 issued July 5, 1977 to Hill et al., but are without marginal pin holes for pin drive feed mechanisms which are not employed in the ECPAP system 10.

Referring to Fig. 2, the cards 30 have a field for receipt of embossed characters 32 and a magnetic stripe 35 for receipt of magnetically encoded magnetic stripe data relating to the account associated with the card. Common window envelopes which have transparent sections to enable viewing of the name and mailing address printed on the contents of the carrier mailing form are, of course, also provided as well as a full charge, or load, to the postage metering machine 18.

The ECPAP system 10 housing contains a slide out drawer for holding the tape driver 14. The blank cards 30 are stacked in a hopper, or chute, 15 and are transported to the card embosser/encoder 20. The cards 30 are embossed with the stored card account information such as the account owner's name, address, card number and expiration date as seen in Fig. 2. The embosser/encoder 20, Fig. 1, also magnetically encodes each card with information identifying the embossed card 30 on the magnetic stripe 35, Fig. 2, of the card. The embossed and encoded cards 30 are transported to a card labeler 60, Fig. 4, for automatic placement of removable stick-on labels on the card 30. The adhered activation labels preferably are preprinted with a telephone number of the card issuer which the card owner calls upon receipt of the card pack through the mail to request activation of the card for use. The embossed cards 30 with the affixed activation labels are carried to the card inserter 24 for placement in printed card carrier forms 26.

A folded fan of blank carrier forms 26 are carried through a forms printer 48 by a forms feeder in the card insertion module 24 The printer 48 prints account information such as the card account owner's name, number and address on the blank carrier forms 26. Additionally, one of a plurality of different bar codes, such as interleaved two of five code, three of nine code, Codabar UPC-A&E and EAN-8&13 identifying the card account information printed on the form 26 is also printed. The form carriers 26, once printed, are sent to a form burster 36. The form burster 36 separates the printed form carrier 26 from the fan to produce individual carrier sheets. In the preferred embodiment, the form burster 36 utilizes a spring loaded plate and a wire mechanism to slice through dividing perforations between the carriers to separate individual printed carrier forms 26 from the fan carrier forms. The separated carrier forms 26 are taken to a card inserter 24 for receipt of the embossed cards 30. As many as four embossed cards are insertable into a single carrier form 26.

If the information on the embossed card 30 does not match the associated carrier form 26 the card 30 and carrier 26 are sent to separate reject piles. Carrier forms 26 containing matching embossed cards 30 are folded and transported to the envelope stuffer 34. The envelopes are stuffed with the filled card carriers 26 and are transferred to a postage metering machine 18, at Fig. 4, to place the appropriate postage on the envelope.

Referring now to Fig. 4, card account data information is stored in a card account data memory 40, such as a 330 Mbyte, 33 MHz memory type for the 486 DX computer 12 made by Everex. The card account data for as many as 400,000 accounts are stored in the memory 40 with 870 bytes per account.

The account information preferably includes the name of the account, or owner of the account, the account number, the date of issuance, the date of expiration, the number of cards per account, the credit limit as well as other account information. The card account information stored in the card data memory 40 and the carrier form data stored in the form data memory 44 are insertable from a different data input sources. A modem 22 inputs form and card data information over a telephone line from a remote computer to the form data memory 44 and card data memory 40. A hardwire network 21 is used to transfer information from a plurality of computers for receipt at the ECPAP system 10. Alternatively, a tape reel 14 or the like is employed for inputting card and carrier form data at the hard drive of the ECPAP system 10. This account information is organized in blocks relating to embossments, magnetic stripe encoding and carrier printing.

Based on this account data and control information from manual inputs on the keyboard 13 shown in Fig. 1, the ECPAP system 10 produces the fully verified credit card mailer pack comprising verified correct credit cards attached to carrier forms verified to match the attached cards within envelopes bearing postage and ready for mailing to the account owner at the name and address printed on the carrier. As noted, the verification is of the utmost importance to insure that only correctly embossed and correctly encoded cards are attached to matching carrier forms which bear the correct name and address of the account owner of the attached cards. Accordingly, one separate data verification is performed on the forms 26 while three separate data verifications are performed on the cards in addition to matching verification between the carriers and matching cards.

Referring still to Fig. 4, the operation of the ECPAP 10 is under control of a microprocessor based computer 12. The microprocessor 12 operates in accordance with a program stored in a program memory 42 and as shown by the program listing attached as Exhibit A. The microprocessor 12 is preferably a model A80486DX-3301 or equivalent microprocessor made by Intel Corporation operating at thirty-three MHz, while the program memory 42 and thus data memory is contained in a single or multiple sectored hard drive having a storage capacity of 330 MBytes and preferably comprises a model LXT340A made by Maxtor Corp. The program stored in the program memory 42 pursuant to which the microprocessor 12 operates to control the remaining electromechanical elements of the ECPAP 10 is illustrated by the listing of the program is attached hereto as Exhibit A.

Under control of the microprocessor 12, the card inserter module 24 has a form feeder, which takes blank carrier forms 26 from a supply of fan folded forms one at a time and passes them through a forms printer 48. A carrier form data memory 44 associated with the microprocessor 12 stores information printed on the blank carrier forms 26. The forms printer 48 then prints on each form stored carrier form information taken from the form carrier data memory 44. This information is selected by the microprocessor 12 from the form carrier data memory 44 and relates to an associated account from the card data memory 40 including the name and mailing address of the account holder and also including other information such as the number of cards to be attached to the carrier form, the dates of issuance and expiration and the credit limit. In addition to the carrier data, the forms printer 48 under control of the microprocessor 12 also prints preselected graphics in color, if desired, and other written information under the terms of the agreement which have been preselected for all or a batch of carriers stored in carrier graphics and carrier printing sections of the carrier data memory 44. Alternatively, preprinted carrier forms 27 with the preprinted carrier account data on the forms are used for receipt of embossed cards 30 in the ECPAP 10 system.

The carrier account information which is unique to each carrier 26 is printed in a machine readable format such as a standard bar code. In keeping with one of the aspects of the invention, multiple types of bar codes are decodable by bar code reader 38 for enhanced versatility. After the indicated carrier account data has been printed on a carrier 26, the printed carrier is passed via a path 50, to a printed forms reader 38 which photoelectronically reads the bar code associated with the printed account carrier information from each carrier 26. The carrier form bar code reader 38 preferably decodes the following bar codes: interleaved two of five code, three of nine code, Codabar UPC-A&E and EAN-8&13.

The read carrier information is passed via a suitable two way communication path 52 to the microprocessor 12 which compares it to the stored carrier information sent to the forms printer 48 via a communication path 54 to determine if there is a match. If the printer operated manually to print the carrier account information for the carrier 26 is the same as the carrier data obtained from the form data memory 44, then there will be a match and the correct printing of the carrier is verified. In that event and if there is a match with card information on a card 30 printed for attachment to the carrier 26, the printed forms continue past the printed forms reader 38 along a path 55 to a form burster 36, then to the inserter 24 where it is mated with one or more verified and matching cards.

If, on the other hand, the carrier account information read from a carrier 26 does not match the carrier information stored in the carrier form data memory 44. Then to achieve another objective of the invention, the carrier advantageously is sent to a carrier form rejection area 90 to prevent the incorrect form from being stuffed into an envelope.

While the carrier forms 26 pass through the forms printer 48 and to the inserter 24, the cards 30 make a similar journey from the stack of cards through a blank cards feeder 58, a card graphics module 62, a card embosser/encoder 20, on embossed card magnetic stripe, or M/S reader 57, a card magnetic stripe reader 64 and a card embossed character reader 70 to the card inserter 24.

The blank cards feeder 58 passes blank cards one at a time to a graphics card module 62 which inputs graphic lettering and designs selectively in color on the blank card surface. The card embosser 20 is preferably of the general type shown in U.S. patent 4,969,760 issued November 13, 1990 to LaManna et al., or the like. The selected card graphics and card printing information is stored in a card graphics and card printing data section of the program memory 42 and relates to information that applies to all cards or a batch of cards and is not unique to each card, as distinguished from the card account data.

The card embosser 20 embosses the card account embossed information into each card in accordance with continued inputs sent via a communication path 68 which are determined by the microprocessor 12 from the card account embossed data section of the card data memory 40. The embossed card 30 is then sent to the card magnetic stripe encoder of the embosser/encoder 20 which encodes the magnetic stripe 35, Fig. 2, on the card 30 with magnetic stripe card information received on the communication path 68 from the microprocessor 12 which, in turn, obtains it from a magnetic stripe card encoding data section of the card data memory 40.

An embossed card magnetic stripe reader 57 reads and decodes information encoded on the magnetic stripe 35, Fig. 2, of the card 30 and compares it with the card account embossed information sent from the card data memory, Fig. 4. If the encoded information on the magnetic stripe 35, Fig. 3, does not match card account information, then the embossed and encoded card 30 is sent to an embossed card reject area 69.

Since the card is incorrectly encoded, it is advantageously prevented from being inserted into a carrier form 26 and stuffed into an envelope to achieve one aspect of the objective of the invention. The embossed and encoded cards 30 are then moved via the embossed/encoded card transporter 66 to the card magnetic stripe, or M/S reader 64 and the card embossed character reader 70 which respectively compares what is read by each via paths 72 and 74 to the microprocessor 12. The card embossed character reader 70 is of the type shown in U.S. patent B1 4,194,685 of Hill et al. entitled "Verifying Insertion System Apparatus and Method of Operation" reissue certificate issued February 19, 1985.

Coupled with the 486 DX computer 12 is a manually operated card jitter tester and analyzer 80 quality check tool built by Q-Card Corp. of Owings Mills, Maryland. A card is manually run through the jitter tester 80 and the computer 12 analyzes the encoding at seventy-five bits per inch of the card for track one and two hundred ten bits per inch for tracks two and three. The card jitter tester and analyzer 80 graphically displays a JT1A report on the display screen 16, Fig. 1, or on a print out indicating if the tested card has been properly encoded. Alternatively, an on line jitter tester 82 is placed for receipt of cards exiting the card embosser/encoder 20. Prior to carrying the embossed and encoded cards 30 to the card labeler 60 by the transporter 66, the on line card jitter tester and analyser 82 reads the cards to verify proper encoding.

The microprocessor 12 compares each reading of the embossed information on the card 30 by the photoptical embossed character reader 70 and the magnetic stripe reader 64 to the account data information stored in the appropriate section of the data memory 40 and to each other. Advantageously, the information decoded from the magnetic stripe 35, Fig. 2, of the card 30 by the magnetic stripe reader 64 is compared with the embossed card character information read from the embossed character reader 70 to determine if there is a match. If there is a match of information, the card 30 is internally verified to be correct, and is passed to the inserter 24. If the coded information from the magnetic stripe reader 64 does not match the embossed character information on the card read by the embossed character reader 70 do not match each other, then the microprocessor 12 identifies the card as being incorrectly embossed or encoded and the card is rejected before insertion into a carrier. In response to checking the embossed cards 30 for correctness and automatically rejecting the identified incorrect cards, the card transporter 66, under the control of the microprocessor 12, passes the correct cards to a card labeler 60. The card labeler 60 automatically applies removable informational labels, such as stick-on card activation label to only the correct cards 30. The card labeler 60 accumulates information concerning the total number of informational labels applied to the cards 30 and the total number of correct cards. The passing of the correct cords 30 to the labeler is selectively performed either manually or automatically in a single cord production apparatus 10.

The inserter 24, under control of reports from the microprocessor 12 via a communication path 76 causes the internally verified card 30 to be matched into a matching carrier 26. Advantageously, the microprocessor in a path 52 compares the coded carrier information read from the form bar code reader 38 with the coded card information read from the magnetic stripe reader 64 to determine if there is a match and thereby eliminates the need for synchronization between card and carrier production to achieve a match without verification. Advantageously, the card inserter 24 rejects the cards 30 which do not match the carrier information decoded from the carrier 26 before insertion into a carrier. The nonmatching cards are sent to a card reject area 81 and the unfilled carrier 26 are separately sent to a carrier form reject area 90. Cards 30 having information which does not match the carrier information are prevented from being inserted into the corresponding carrier at the card inserter 24. The embossed cards 30 which have card information that matches the decoded carrier information are mounted into matching carrier 26 at the card inserter 24.

One or more cards 30 are selectively insertable into a single matching carrier form 26. The automatic card mounting apparatus or card inserter 24 is located at an insertion station at which cards 30 are mounted to carrier forms 26. The embossed card pack production system 10 routes cards 30 to a plurality of different carrier mailing forms 26. Referring to Figs. 3A and 3B two types of carrier forms 26A and 26B employed in the ECPAP 10, Fig. 1, are shown holding embossed cards 30. The first type of form 26A, Fig. 3A, is flexible planar body 93 having a pair of spaced parallel ear shaped slots, or corner pockets, 28 for receipt of the sides 31 of a card 30 and one of either the top or the bottom of the card. The form 26A has a bottom slot or lip 33 for receipt of the other of the top or bottom or the card 30. The corner pockets 28 and the lip 33 are cut from the flexible planar body 93. The card 30 is held between the pockets 28 and the lip 33 at a location spaced from the periphery of the body 93. The corner pockets 28 hold the card 30 against movement in three of four possible rectilinear directions. The lip 33 engages with an edge of the card 30 and is intermediate to the corners of the card to hold the card 30 against movement in the fourth possible rectilinear direction. A second type of carrier form 26B seen in Fig. 3B having a flexible planar body 93 with a pair of parallel spaced side slot sections 29 and a fold 89 to hold the card 30 within the side slots. The mailing form 26B has a pair of rectilinear slots 39 cut in the body 93 to form a pair of opposed corner pockets for receipt of opposed corners 41 of the card 30. The rectilinear slots 39 have a pair of parallel spaced slot sections 29 and a cross slot section 43 transversely extending between the pair of parallel spaced slot sections 29.

In the ECPAP system 10 a card feeder or transporter 66 feeds cards 30 to the insertion station at which a card inserter 24 is located. The card inserter module 24 includes a forms feeder adapted to feed the different types of mailing form carrier 26A, 26B form the fan of folded carriers to the insertion station. A first type of card insertion apparatus 24 is releasably mounted at the insertion station to insert cards 30 into one type of form carrier 26A. The card inserter 24 automatically mounts embossed cards 30 to the first type of carrier forms 26A. To insert cards 30 into a different or second type of carrier 26B in the ECPAP system 10, the first type of inserter is removed from the insertion station and mounted in its place in a second type of card insertion apparatus for inserting cards into a second type of carrier form 26B. The embossed cards 30 are automatically mounted to the second type of carrier mailing form 26B by using the second type of insertion apparatus.

After all the cards 30 have been attached to a matching carrier form 26, the inserter 24 passes the filled carrier form via path 84 to a form folder 86. The form folder 86 folds the filled carrier 26 along two perforation lines 89, Fig. 3, to divide the carrier into three equal areas. The folded carrier forms 26 are rotated by an arm at a form rotation station 88 for insertion into mailing envelopes. Empty carrier forms 26 which do not match with a corresponding card or are otherwise improperly prepared are sent via a transportation path 87 to a form reject area 90 to avoid placement into mailing envelopes. Folded carriers 26 with correctly matched embossed cards 30 are carried along a form transporter 92 to the envelope stuffer 34. The envelope stuffer 18 preferably used is a Pitney Bowes Spectrum Model F400. The envelope stuffer 34 places the filled and folded carrier form 26 into a window envelope from a supply of window envelopes. The stuffed envelopes are then sealed and passed to a postage metering machine (not shown) which applies correct postage to the envelope. The postage metering machine used is preferably one made by Pitney Bowes such as Paragon Mail Processor Model Nos. USS4 - USS9, Eagle Model E660 or E670, or a Model 5300 or 5636.

The method of mounting cards 30 to carrier mailing forms 26 in the embossed card pack production system 10 is shown having the basic steps of: (1) reading card information from each of the cards, (2) sensing a code printed on a carrier, (3) automatically determining which of a plurality of different possible types of codes on the carriers is the code sensed from each carrier, (4) decoding from each carrier the code in accordance with the type of code determined for each carrier to obtain carrier information, (5) comparing the card information from each card with the obtained carrier information to determine if there is a match, (6) rejecting cards which do not match the carrier information decoded from the carrier, (7) mounting cards to carriers which have carrier information decoded from the plurality of codes that matches the card information of the cards.

Also preferably performed in the embossed card pack production apparatus 10 is a method of processing credit card packages, each having at least one card with card information mounted to a mailing form with carrier information corresponding to the card information of the mounted card having the steps of: (1) rejecting cards which have incorrect card information, (2) rejecting carriers which have incorrect carrier information printed thereon, (3) accumulating card package production information including the number of cards rejected and the number of carriers rejected and (4) printing the card production package.

While a detailed description of the preferred embodiment of the invention has been given, it should be appreciated that many variations can be made thereto without departing from the scope of the invention as set forth in the appended claims.

## Claims

1. A method of mounting cards to a plurality of different carrier forms, comprising the step of :
automatically mounting cards (30) to a first type of carrier form (26A) with an automatic card mounting apparatus (24) having
an insertion station at which cards are mounted to carrier forms, and
a card feeder (66) for feeding cards to the insertion station, characterized in that said automatic card mounting apparatus further comprises
a forms feeder adapted to feed different types of carrier forms (26A, 26B) to the insertion station ;
said method further comprising the steps of :
releasably mounting a first type of insertion apparatus at the insertion station to insert cards into a first type of carrier form (26A) ;
automatically inserting cards to the first type of carrier forms (26A) with the first type of insertion apparatus ;
removing the first type of insertion apparatus from the insertion station and mounting in its place a second type of insertion apparatus for inserting cards into a second type of carrier forms (26B) ; and
automatically inserting cards to the second type of carrier forms (26B) by using the second type of insertion apparatus.

2. The method of claim 1 in which the first type of form has
a pair of parallel ear shaped slots for receipt of the sides of the card and one of the top and bottom of the card, and
a bottom slot for receipt of the other of the top and bottom of the card.

3. The method of claim 1 in which the second type of form has
a pair of parallel side slots, and
a fold to hold a card within the side slots.

## Patentansprüche

1. Verfahren zum Einsetzen von Karten in eine Vielzahl verschiedener Trägerformen, bestehend aus der Stufe:
automatisches Einsetzen der Karten (30) in einen ersten Typ einer Trägerform (26A) mit einem automatischen Karteneinsetzgerät (24), welches
eine Einfügestation aufweist, in welcher die Karten in die Trägerformen eingesetzt werden, und
eine Kartenzuführeinrichtung (66) zum Zuführen der Karten an die Einfügestation,
dadurch gekennzeichnet, daß das automatische Karteneinsetzgerät weiterhin besteht aus
einer Formenzuführeinrichtung, die für ein Zuführen verschiedener Typen von Trägerformen (26A, 26B) an die Einfügestation angepaßt ist;
wobei das Verfahren die weiteren Stufen aufweist:
ein frei zu setzendes Einsetzen eines ersten Typs eines Einfügegerätes an der Einfügestation für ein Einfügen von Karten in einen ersten Typ einer Trägerform (26A);
ein automatisches Einsetzen von Karten in den ersten Typ von Trägerformen (26A) mit dem ersten Typ des Einfügegerätes;
ein Entfernen des ersten Typs des Einfügegerätes aus der Einfügestation und ein Einsetzen an dessen Stelle eines zweiten Typs eines Einfügegerätes für ein Einfügen von Karten in einen zweiten Typ von Trägerformen (26B); und
ein automatisches Einfügen von Karten in den zweiten Typ von Trägerformen (26B) durch Benutzung des zweiten Typs des Einfügegerätes.

2. Verfahren nach Anspruch 1, bei welchem der erste Formentyp ein Paar paralleler ohrenförmiger Schlitze aufweist für eine Aufnahme der Seiten der Karte und von einer der Ober- und Unterseiten der Karte, und einen Bodenschlitz zur Aufnahme der anderen der Ober- und Unterseiten der Karte.

3. Verfahren nach Anspruch 1, bei welchem der zweite Formentyp ein Paar paralleler Seitenschlitze aufweist und einen Falz zum Halten einer Karte innerhalb der Seitenschlitze.

## Revendications

1. Procédé de montage de cartes sur plusieurs formes de support différentes, comprenant l'étape qui consiste à :
monter automatiquement des cartes (30) sur un premier type de forme de support (26A) au moyen d'un appareil de montage automatique de cartes (24) comportant
un poste d'insertion au niveau duquel les cartes sont montées sur des formes de support, et
un dispositif d'amenée de cartes (66) destiné à amener des cartes jusqu'au poste d'insertion, caractérisé en ce que ledit appareil de montage automatique de cartes comprend également
un dispositif d'amenée de formes adapté pour amener différents types de formes de support (26A, 26B) jusqu'au poste d'insertion;
ledit procédé comprenant en outre les étapes qui consistent à :
monter de manière amovible un premier type d'appareil d'insertion au niveau du poste d'insertion pour insérer des cartes dans un premier type de forme de support (26A);
insérer automatiquement des cartes dans le premier type de forme de support (26A) au moyen du premier type d'appareil d'insertion;
démonter le premier type d'appareil d'insertion du poste d'insertion et monter à sa place un second type d'appareil d'insertion pour insérer des cartes dans un second type de forme de support (26B); et
insérer automatiquement des cartes dans le second type de forme de support (26B) à l'aide du second type d'appareil d'insertion.

2. Procédé selon la revendication 1, suivant lequel le premier type de forme comporte
deux fentes parallèles en forme d'oreilles destinées à recevoir les côtés de la carte et l'une de la partie supérieure et de la partie inférieure de la carte, et
une fente inférieure destinée à recevoir l'autre de la partie supérieure et de la partie inférieure de la carte.

3. Procédé selon la revendication 1, suivant lequel le second type de forme comporte
deux fentes latérales parallèles, et
un pli pour maintenir une carte dans les fentes latérales.
